# EUROPÄISCHE PATENTSCHRIFT

(11) **EP 2 114 711 B1**
(45) Veröffentlichungstag und Bekanntmachung des Hinweises auf die Patenterteilung: **25.06.2014**
(21) Anmeldenummer: 08707632.9
(22) Anmeldetag: 08.02.2008
(51) Int. Cl.: B60J 5/06

(54) **SCHIEBETÜRE FÜR EIN KRAFTFAHRZEUG**
SLIDING DOOR FOR A MOTOR VEHICLE
PORTE COULISSANTE POUR UN VÉHICULE À MOTEUR

(30) Priorität: 08.02.2007 DE 102007006360
(43) Veröffentlichungstag der Anmeldung: 11.11.2009
(73) Patentinhaber: DURA Automotive Body & Glass Systems GmbH, 58840 Plettenberg (DE)
(72) Erfinder: HEUEL, Gerhard, 57462 Olpe (DE); SCHMIDT, Reiner, 32425 Minden (DE)
(74) Vertreter: Zinnecker, Armin
(86) Internationale Anmeldenummer: PCT/EP2008/000987
(87) Internationale Veröffentlichungsnummer: WO 2008/095729

(56) Entgegenhaltungen:
- EP-A- 0 531 179
- DE-B3- 10 304 707
- JP-A- 2007 023 586
- JP-A- 2007 023 587
- JP-A- 2007 120 113
- US-A1- 2004 119 823

## Beschreibung

Die Erfindung betrifft eine Schiebetüre für ein Fahrzeug, insbesondere für ein Kraftfahrzeug, nach dem Oberbegriff des Anspruchs 1. Die Schiebetüre weist an ihrer Innenseite eine Führungsschiene auf, die in einem Gleitschlitten längsverschieblich gelagert ist. An dem Fahrzeug ist ein Scharnierbügel schwenkbar gelagert. Der Scharnierbügel ist an dem Gleitschlitten schwenkbar gelagert.

Eine derartige Schiebetüre ist aus der EP 1 721 768 A1 bekannt.

Aus der DE 38 16 175 C2 ist eine Schwenkschiebetür für ein Fahrzeug bekannt, bei der die Steuerung der Türbewegung über Endschalter oder Sensoren direkt aus der Bewegung des Türflügels abgeleitet werden kann.

Aus der DE 10 2004 053 711 A1 ist eine Abstandswarnvorrichtung zum Einhalten eines Abstands zu einer Fahrzeugtür bekannt.

Die US 2004/0119823 A1 offenbart eine Vorrichtung zum Überwachen der Umgebung eines Fahrzeugs.

Aus der DE 692 01 615 T2 ist eine Sicherheitsvorrichtung für eine Schiebetüre eines Kraftfahrzeugs bekannt, mit der das Öffnen der Schiebetüre über den Schwenkbereich der Tankklappe hinaus verhindert werden kann.

Aus der JP 2007 023 587 A ist eine Schiebetüre für ein Fahrzeug bekannt, dessen Karosserie an seiner Außenseite eine Führungsschiene aufweist. Das Fahrzeug umfaßt einen elektrostatischen Sensor, der ein Objekt in der Türöffnung erkennen kann.

Die JP 2007 023 586 A offenbart eine ähnliche Schiebetüre.

Aus der DE 103 04 707 B3 ist ein Fahrzeug mit einer Außenschwingtür, also einer verschwenkbar sich öffnenden Fahrzeugtür, mit einem Sensor zur Erfassung des Lenkwinkels des Vorderrades bekannt. In Abhängigkeit vom Lenkwinkelsignal dieses Sensors wird die Lenkstellung des Vorderrades automatisch verändert.

Die EP-A-0 531 179 offenbart eine Schiebetüre für ein Fahrzeug, das an seiner Außenseite eine Führungsschiene aufweist. Ein Sensor erfaßt die Stellung des Tankdeckels, so daß die Bewegung der Schiebetüre blockiert wird, wenn der Tankdeckel geöffnet ist.

Aufgabe der Erfindung ist es, eine verbesserte Schiebetüre für ein Fahrzeug vorzuschlagen.

Erfindungsgemäß wird diese Aufgabe durch die kennzeichnenden Merkmale des Anspruchs 1 gelöst.

Gemäß der Erfindung ist eine Zustandsgröße des Fahrzeugs feststellbar. Die Öffnungsbewegung der Schiebetüre ist in Abhängigkeit von der festgestellten Zustandsgröße beeinflußbar und/oder begrenzbar. Durch die Erfindung kann die Betriebsicherheit erhöht werden. Hierzu wird eine Zustandsgröße des Fahrzeugs festgestellt, die das Vorhandensein eines Hindernisses in der Öffnungbahn der Schiebetüre repräsentiert. Die Öffnung der Schiebetüre wird derart beeinflußt und/oder begrenzt, daß die Schiebetüre nicht mit dem Hindernis kollidiert.

Es ist möglich, daß mehrere Zustandsgrößen des Fahrzeugs feststellbar sind und daß die Öffnungsbewegung der Schiebetüre in Abhängigkeit von einer, mehreren oder allen festgestellten Zustandsgrößen beeinflußbar und/oder begrenzbar ist.

Die Erfindung ist ferner dadurch gekennzeichnet, daß der Öffnungswinkel der Schiebetüre in Abhängigkeit von der festgestellten Zustandsgröße bestimmbar ist.

Vorteilhafte Weiterbildungen sind in den Unteransprüchen beschrieben.

Vorteilhaft ist es, wenn einer oder mehrere Sensoren zum Feststellen einer oder mehrerer oder aller Zustandsgrößen des Fahrzeugs vorgesehen sind.

Nach einer weiteren vorteilhaften Weiterbildung ist der Radeinschlag des Fahrzeugs feststellbar. Die eingeschlagenen lenkbaren Räder des Fahrzeugs können ein Hindernis für die Öffnung der Schiebetüre bilden. Dementsprechend ist es vorteilhaft, wenn der Radeinschlag der lenkbaren Räder des Fahrzeugs feststellbar ist. Insbesondere können die Richtung und/oder das Ausmaß des Radeinschlages feststellbar sein.

Vorzugsweise ist ein Drehwinkelsensor für die Lenkstange des Fahrzeugs vorhanden. Aus dem Drehwinkel, den der Drehwinkelsensor für die Lenkstange des Fahrzeugs feststellt, kann auf die Richtung und/oder das Ausmaß des Radeinschlags geschlossen werden.

Stattdessen oder zusätzlich können zwei oder mehr Endschalter für die Lenkung des Fahrzeugs vorgesehen sein. Die Endschalter können Drehpositionen der Lenkstange des Fahrzeugs erfassen. Es ist allerdings auch möglich, daß die Endschalter die Positionen anderer Bauteile erfassen, die bei der Betätigung der Lenkung des Fahrzeugs bewegt werden.

Nach einer weiteren vorteilhaften Weiterbildung ist die Öffnung der Tankklappe des Fahrzeugs feststellbar. Es ist möglich, daß bestimmte Positionen oder Endpositionen der Öffnung der Tankklappe feststellbar sind. Stattdessen oder zusätzlich kann allerdings auch das Ausmaß der Öffnung der Tankklappe des Fahrzeugs feststellbar sein. Hierfür können geeignete Sensoren verwendet werden.

Nach einer weiteren vorteilhaften Weiterbildung ist das Vorhandensein einer Zapfpistole in der Tanköffnung des Fahrzeugs feststellbar.

Vorteilhaft ist es, wenn ein Motor zum Antrieb der Führungsschiene vorhanden ist. Dabei kann es sich um einen Elektromotor und/oder einen Getriebemotor handeln. Der Motor ist vorzugsweise an dem Gleitschlitten vorgesehen. Durch den Motor kann die Führungsschiene relativ zum Gleitschlitten angetrieben werden.

Vorteilhaft ist es, wenn ein Motor zum Antrieb des Scharnierbügels vorgesehen ist. Der Motor ist vorzugsweise an dem Fahrzeug bzw. Kraftfahrzeug vorgesehen. Es kann sich um einen Elektromotor und/oder um einen Getriebemotor handeln. Durch den Motor kann der Scharnierbügel verschwenkt werden.

Eine weitere vorteilhafte Weiterbildung ist dadurch gekennzeichnet, daß die Schiebetüre an dem dem Scharnierbügel abgewandten Ende an dem Fahrzeug arretierbar ist. Vorzugsweise ist die Schiebetüre in der Weise arretierbar, daß an der Arretierungsstelle bei einer Verschwenkung des Scharnierbügels ein Längenausgleich und eine Drehbarkeit ermöglicht werden.

Dies ist vorzugsweise dadurch erreichbar, daß an dem Fahrzeug ein Scharnierbolzen für eine Scharnierkulisse an der Schiebetüre vorgesehen ist. Die Anordnung kann auch in umgekehrter Weise getroffen sein: Dann ist der Scharnierbolzen an der Schiebetüre vorgesehen, und die Scharnierkulisse ist an dem Fahrzeug vorgesehen. Vorzugsweise handelt es sich um eine offene Scharnierkulisse, in die der Scharnierbolzen eindringen kann und die der Scharnierbolzen verlassen kann. Besonders geeignet sind U-förmige Scharnierkulissen. Der Scharnierbolzen und die Scharnierkulisse sind vorzugsweise derart angeordnet und aufeinander abgestimmt, daß sie die Schiebetüre in die Schließstellung führen.

An der Scharnierkulisse ist vorzugsweise ein Schalter, insbesondere ein Mikroschalter, vorgesehen. Der Schalter befindet sich vorzugsweise in der Nähe des Endes der Scharnierkulisse, also in der Nähe derjenigen Stelle, in der der Scharnierbolzen die Scharnierkulisse verläßt bzw. in die Scharnierkulisse eintritt. Durch den Schalter kann der Punkt, an dem eine Längsbewegung der Schiebetüre beginnen soll, erfaßt werden.

Eine weitere vorteilhafte Weiterbildung ist dadurch gekennzeichnet, daß an dem Scharnierbügel ein Umlenkarm mit einem Führungsstift vorgesehen ist, der in einer an der Schiebetüre vorgesehenen Umlenkführung geführt ist.

Vorzugsweise zweigt von der Umlenkführung eine Schloßführung ab.

Die Abzweigstelle der Schloßführung von der Umlenkführung ist vorzugsweise durch eine Schloßklinke schließbar. Vorteilhaft ist es, wenn die Schloßklinke schwenkbar gelagert ist. Vorzugsweise ist die Schloßklinke ein Bestandteil der Schloßführung.

In der Schloßführung kann eine Sperrnase für den Führungsstift vorgesehen sein.

Die Schloßklinke ist vorzugsweise federbelastet. Vorteilhaft ist es, wenn die Schloßklinke verriegelbar ist, vorzugsweise durch einen Verriegelungsbolzen.

Die Erfindung betrifft ferner ein Fahrzeug, insbesondere ein Kraftfahrzeug, das durch eine erfindungsgemäße Schiebetüre gekennzeichnet ist.

Die Erfindung betrifft ferner ein Verfahren zum Öffnen einer Schiebetüre eines Fahrzeugs, die an ihrer Innenseite eine Führungsschiene aufweist, die in einem Gleitschlitten längsverschieblich gelagert ist, wobei an dem Fahrzeug ein Scharnierbügel schwenkbar gelagert ist und der Scharnierbügel an dem Gleitschlitten schwenkbar gelagert ist. Das Verfahren ist erfindungsgemäß dadurch gekennzeichnet, daß eine Zustandsgröße des Fahrzeugs festgestellt wird und daß die Öffnung der Schiebetüre in Abhängigkeit von der festgestellten Zustandsgröße begrenzt wird.

Erfindungsgemäß ist der Öffnungswinkel der Schiebetüre in Abhängigkeit von der festgestellten Zustandsgröße bestimmbar.

Vorteilhaft ist es, wenn die Schiebetüre eines oder mehrere oder alle der beschriebenen vorteilhaften Weiterbildungen aufweist.

Ein Ausführungsbeispiel der Erfindung wird nachstehend anhand der beigefügten Zeichnung im einzelnen erläutert. In der Zeichnung zeigt
- Fig. 1: einen Teil einer Karosserie eines Kraftfahrzeugs mit einer teilweise geöffneten Schiebetüre in einer Seitenansicht,
- Fig. 2: die Karosserie gemäß Fig. 1 in einer Ansicht von oben,
- Fig. 3: die Schiebetüre gemäß Fig. 1 und 2 im geöffneten Zustand in einer Seitenansicht,
- Fig. 4: die Schiebetüre gemäß Fig. 3 in einer Ansicht von oben,
- Fig. 5: den Scharnierbügel und die diesem zugeordneten Bauteile in einer perspektivischen Ansicht,
- Fig. 6: die Bauteile gemäß Fig. 5, allerdings ohne einige Karosseriebauteile,
- Fig. 7: den Gleitschlitten und die ihm zugeordneten Bauteile in einer perspektivischen Ansicht,
- Fig. 8: die Bauteile gemäß Fig. 7, allerdings ohne einige Teile des Gleitschlittens,
- Fig. 9: den Scharnierarm und die Umlenkführung in einer Ansicht von oben bei geschlossener Schiebetür,
- Fig. 10: eine der Fig. 9 entsprechende, perspektivische Darstellung,
- Fig. 11: den Scharnierarm und die Umlenkführung in einer Ansicht von oben bei angestellter Schiebetüre,
- Fig. 12: den Umlenkarm und die Umlenkführung in einer perspektivischen Darstellung bei angestellter Schiebetüre,
- Fig. 13: eine der Fig. 12 entsprechende Darstellung bei einer Zwischenstellung der Schiebetüre,
- Fig. 14: eine den Fig. 12 und 13 entsprechende Darstellung bei einer weiter vorangeschrittenen Zwischenstellung der Schiebetüre,
- Fig. 15: eine den Fig. 12 bis 14 entsprechende Darstellung bei geöffneter Schiebetüre,
- Fig. 16: die linke Seite eines Kraftfahrzeugs bei geschlossener Schiebetüre in einer Ansicht von oben,
- Fig. 17: die linke Seite des Kraftfahrzeugs gemäß Fig. 16 mit teilweise geöffneter Schiebetüre in einer Ansicht von oben,
- Fig. 18: die linke Seite des Kraftfahrzeugs gemäß Fig. 16 und 17 mit vollständig geöffneter Schiebetüre in einer Ansicht von oben und
- Fig. 19: die linke Seite des Kraftfahrzeugs gemäß Fig. 16 bis 18 mit nach links eingeschlagenen Vorderrädern und einer teilweise geöffneten Schiebetüre in einer Ansicht von oben.

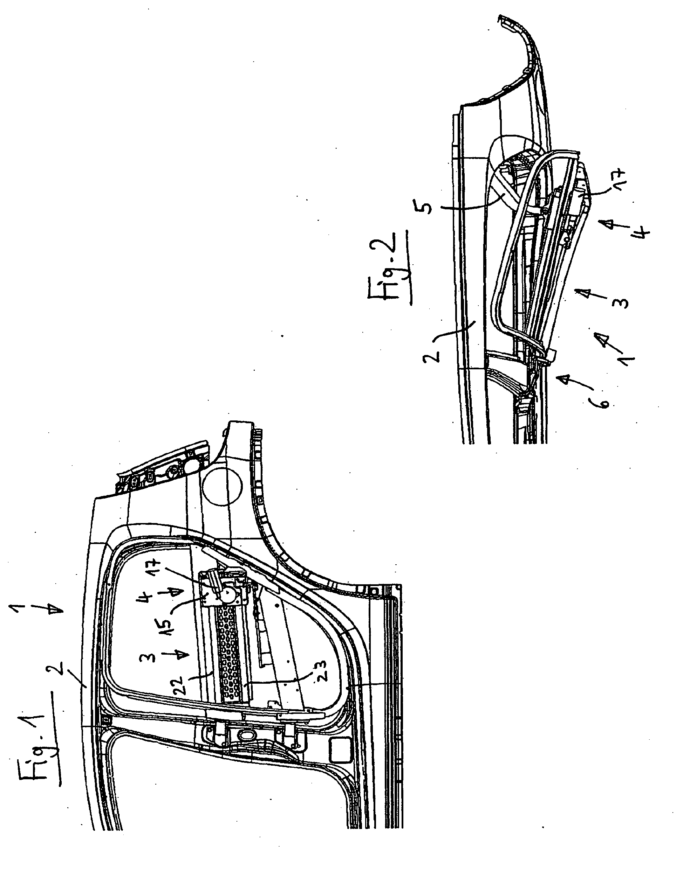

In Fig. 1 und 2 ist eine Schiebetüre 1 gezeigt, die gegenüber der Karosserie 2 eines Kraftfahrzeugs teilweise geöffnet ist. Die Schiebetüre 1 weist an ihrer Innenseite eine Führungsschiene 3 auf, die in einem Gleitschlitten 4 längsverschieblich gelagert ist.

An der Karosserie 2 ist ein Scharnierbügel 5 schwenkbar gelagert. Am anderen Ende des Scharnierbügels 5 ist der Gleitschlitten 4 schwenkbar gelagert.

Beim Öffnen der Schiebetüre 1 wird diese zunächst aus der geschlossenen Stellung (in der Zeichnung nicht dargestellt) in die teilweise geöffnete Stellung, die in Fig. 1 und 2 gezeigt ist, verschwenkt. Dies geschieht durch eine Verschwenkung des Scharnierbügels 5. Um diese Schwenkbewegung zu ermöglichen, ist an dem dem Scharnierbügel 5 gegenüberliegenden Ende der Schiebetüre 1, im dargestellten Ausführungsbeispiel also am vorderen Ende der Schiebetüre 1, eine U-förmige Scharnierkulisse 6 vorgesehen. Die U-förmige Scharnierkulisse 6 verläuft im wesentlichen parallel zur Fahrzeug-Längsrichtung. Sie ist an ihrem dem Scharnierbügel 5 abgewandten, im Ausführungsbeispiel also vorderen Ende offen. In die U-förmige Scharnierkulisse 6 greift ein Scharnierbolzen 7 ein, der im wesentlichen vertikal nach oben ragt. Durch den Scharnierbolzen 7 und die Scharnierkulisse 6 ist die Schiebetüre 7 an dem dem Scharnierbügel 5 abgewandten Ende an dem Fahrzeug arretierbar.

Wenn die Schiebetüre 1 vollständig geschlossen ist, liegt der Scharnierbolzen 7 innerhalb der U-förmigen Scharnierkulisse 6, und zwar im Abstand von deren Ende. Während der durch eine Verschwenkung des Scharnierbügels 5 erzeugten Öffnungsbewegung führt die Schiebetüre 1 eine Verschwenkung um den Scharnierbolzen 7 aus. Dabei gleitet die U-förmige Scharnierkulisse 6 relativ zum Scharnierbolzen 7 von diesem weg. In der in Fig. 1 und 2 gezeigten Stellung der Schiebetüre 1, in der die Schiebetüre 1 angestellt ist, befindet sich der Scharnierbolzen 7 am offenen Ende der U-förmigen Scharnierkulisse 6.

Bei der Schließbewegung wird die Schiebetüre 1 derart positioniert, daß das offene Ende der U-förmigen Scharnierkulisse 6 den Scharnierbolzen 7 aufnimmt. Hierdurch wird die Schließbewegung der Schiebetüre 1 bis zur vollständig geschlossenen Stellung ermöglicht.

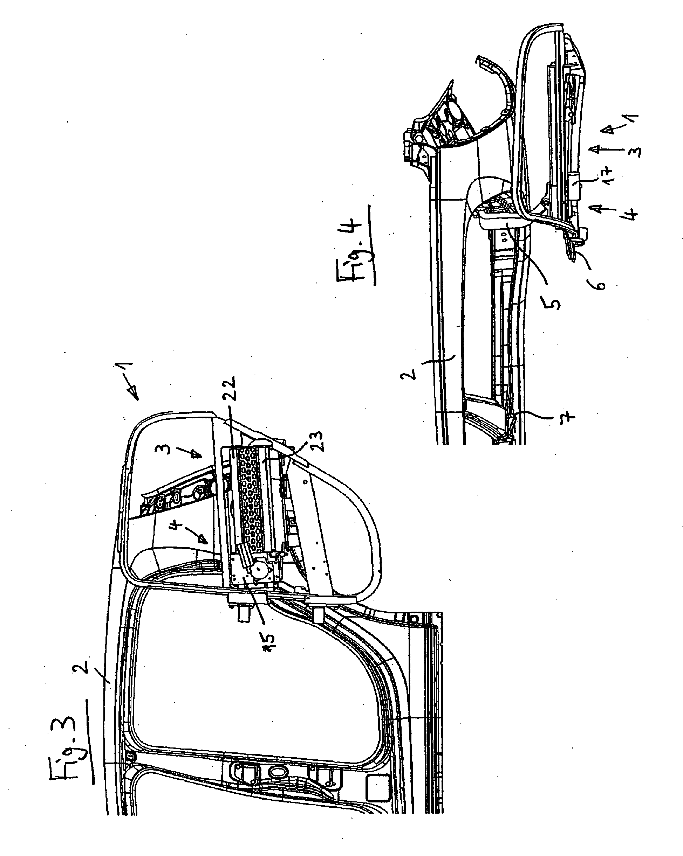

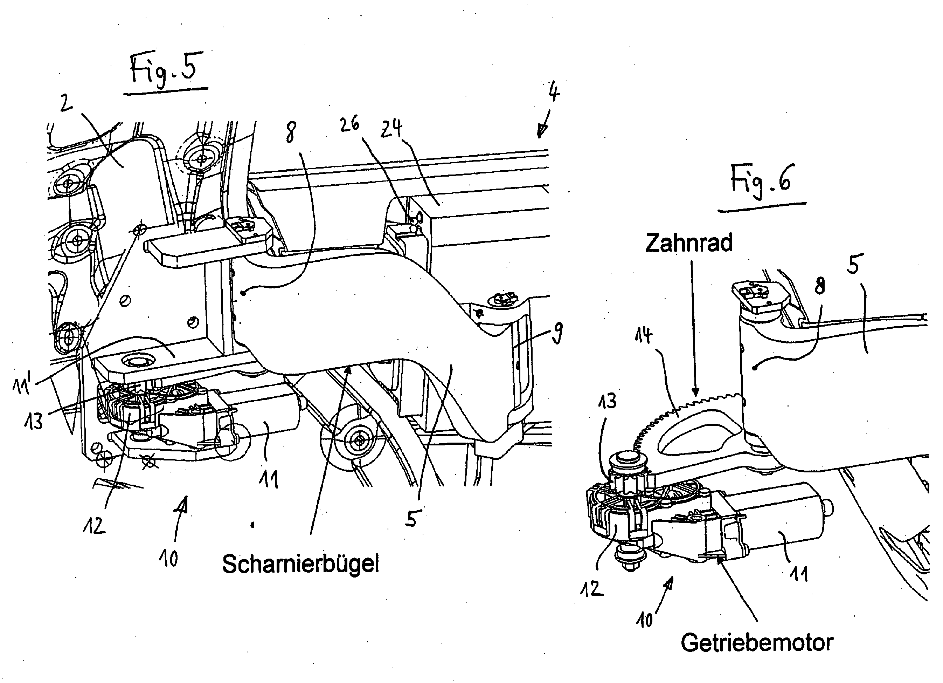

In Fig. 5 und 6 sind der Scharnierbügel 5 und die ihn umgebenden Teile vergrößert dargestellt. Der Scharnierbügel 5 ist an einem Teil der Karosserie 2 um eine im wesentlich vertikal verlaufende Achse 8 schwenkbar gelagert. Er ist an seinem anderen Ende um eine ebenfalls im wesentlichen vertikal verlaufende Achse 9 an dem Gleitschlitten 4 schwenkbar gelagert. Der Scharnierbügel 5 umfaßt ein Mitteilteil, das in der Ansicht von oben (Fig. 2 und 4) im wesentlichen gerade bzw. eben verläuft, das allerdings, wie insbesondere aus Fig. 5 ersichtlich, in der Richtung von der Karosserie 2 zum Gleitschlitten 4 schräg nach unten verläuft. Von dem Mittelteil des Scharnierbügels 5 knicken zwei Endteile, an deren Enden sich die Achsen 8, 9 befinden, in der Ansicht von oben (Fig. 2 und 4) ab, wobei das der Achse 8 zugewandte Ende um einen Winkel von etwa 90° abknickt und das der Achse 9 zugewandte Ende um einen Winkel von etwa 45° abknickt, so daß die Endteile in einem Winkel von etwa 135° zueinander stehen.

Zum Schwenkantrieb des Scharnierbügels 5 dient ein Getriebemotor 10, der an einem Winkelblech 11' an der C-Säule der Karosserie 2 befestigt ist. Der Getriebemotor 10 umfaßt einen Elektromotor 11, der ein Getriebe 12 antreibt, dessen vertikal verlaufende Ausgangswelle ein Zahnrad 13 trägt, das durch den Getriebemotor 10 antreibbar ist.

In Fig. 6 ist gegenüber der Darstellung in Fig. 5 das Winkelblech 11' weggelassen. Wie aus Fig. 6 ersichtlich, greift das Zahnrad 13 in ein Zahnrad 14 ein, das an dem Schwenkarm 5 vorgesehen ist. Das Zahnrad 14 ist um die Achse 8 schwenkbar gelagert. Es ist drehfest mit dem Schwenkarm 5 verbunden. Da der Schwenkarm 5 nur eine Drehung um etwa 90° ausführen muß, erstreckt sich auch das Zahnrad 14 nur über einen Winkelbereich von im wesentlichen 90°.

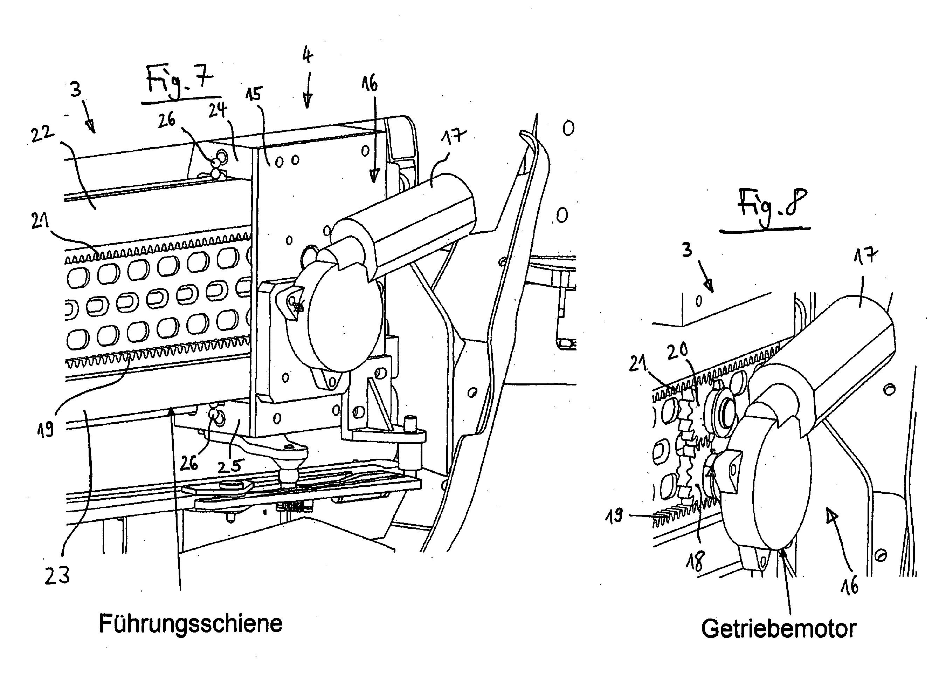

Wie aus Fig. 7 ersichtlich, ist an einer im wesentlichen vertikal verlaufenden Verbindungsplatte 15 des Gleitschlittens 4 ein Getriebemotor 16 befestigt, der zum Antrieb der Führungsschiene 3 dient. Der Getriebemotor 16 umfaßt einen Elektromotor 17, dessen im wesentlichen horizontal und parallel zur Führungsschiene 3 verlaufende Ausgangswelle ein Schneckenrad trägt, das ein Zahnrad antreibt, dessen Drehachse im wesentlichen horizontal und quer zur Führungsschiene 3 verläuft.

Dieses Zahnrad ist mit einem Zahnrad 18 verbunden, das in Fig. 8 zu sehen ist, da dort die Verbindungsplatte 15 des Gleitschlittens 4 weggelassen wurde. Das Zahnrad 18 greift in eine Zahnstange 19 ein, die an der Schiebetüre 1 vorgesehen ist. Die Zahnstange 19 verläuft parallel zu der Führungsschiene 3.

Das von dem Getriebemotor 16 angetriebene Zahnrad 18 greift ferner in ein weiteres Zahnrad 20 ein, das seinerseits in eine weitere Zahnstange 21 eingreift. Das angetriebene Zahnrad 20 hat denselben Durchmesser und dieselbe Zähnezahl wie das antreibende Zahnrad 18. Es ist an dem Gleitschlitten 4 um eine Achse drehbar gelagert, die zur Achse des antreibenden Zahnrads 18 parallel und von dieser beabstandet ist. Die weitere Zahnstange 21 verläuft parallel zu und im Abstand von der ersten Zahnstange 19. Die von dem Getriebemotor 16 in das antreibende Zahnrad 18 eingeleitete Drehbewegung versetzt das angetriebene Zahnrad 20 in eine gegenläufige Drehbewegung. Die gegenläufigen Drehungen der Zahnräder 18, 20 bewirken durch die Abstützung an den Zahnstangen 19, 21 eine lineare Bewegung der Führungsschiene 3 gegenüber dem Gleitschlitten 4.

Wie aus Fig. 7 ersichtlich, umfaßt die Führungsschiene 3 eine obere Führungsleiste 22 und eine untere Führungsleiste 23, deren äußere Enden von Führungsblöcken 24, 25 des Gleitschlittens 4 übergriffen werden. Die Gleitführung der Führungsleisten 22, 23 in den Führungsblöcken 24, 25 erfolgt durch Wälzlager 26.

Durch die Erfindung wird ein elektromechanisches Antriebssystem für eine Schiebetüre eines Fahrzeugs, insbesondere eines Kraftfahrzeugs, geschaffen, die zwei Antriebseinheiten umfassen kann, die jeweils unterschiedliche Funktionen übernehmen. Eine erste Antriebseinheit wird von dem Getriebemotor 10 und den diesem zugeordneten Bauteilen realisiert. Diese Antriebseinheit übernimmt die erste Öffnungsbewegung der Schiebetüre 1, also das "Anstellen" der Schiebetüre 1, wie beispielsweise in Fig. 1 und 2 gezeigt. Eine zweite Antriebseinheit wird von dem Getriebemotor 16 und den ihm zugeordneten Bauteilen gebildet. Diese Antriebseinheit übernimmt die "Linearbewegung" der Schiebetüre 2 bis zur vollständig geöffneten Stellung, die in Fig. 3 und 4 gezeigt ist, und wieder zurück. Die erste Antriebseinheit und die zweite Antriebseinheit können elektromechanisch derart miteinander verbunden werden, daß sich hieraus eine Öffnungsbewegung und die entgegengesetzte Schließbewegung ergibt.

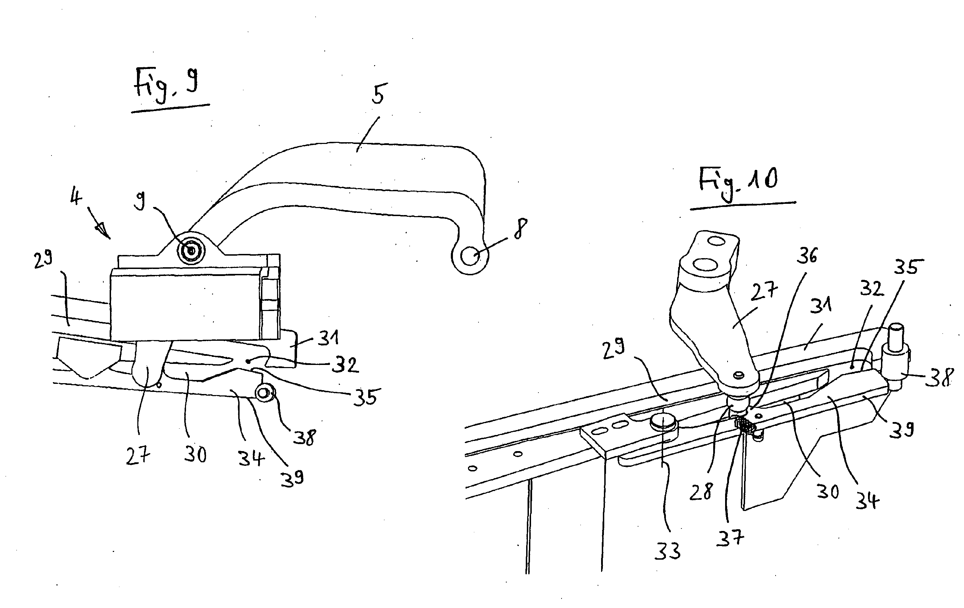

In Fig. 9 bis 19 ist der Bewegungsablauf beim Öffnen und Schließen der Schiebetüre 1 dargestellt. An dem Scharnierbügel 5 ist ein Umlenkarm 27 vorgesehen, der an seinem Ende einen Führungsstift 28 aufweist. Der Umlenkarm 27 bildet eine Verlängerung des der Achse 9 zugewandten Endteils des Scharnierbügels 5.

Der Führungsstift 28 weist eine Kugelkalotte auf, die in einer Umlenkführung 29 und in einer Schloßführung 30 geführt wird. Die Umlenkführung 29 ist einem Führungsblech 31 vorgesehen, das mit der Schiebetüre 1 verbunden ist. Sie erstreckt sich im wesentlichen in Fahrzeug-Längsrichtung.

Die Schloßführung 30 zweigt von der Umlenkführung 29 ab. Die Abzweigstelle 32 befindet sich an dem hinteren Ende der Umlenkführung 29. Die Schloßführung 30 verläuft in einem spitzen Winkel zur Umlenkführung 29.

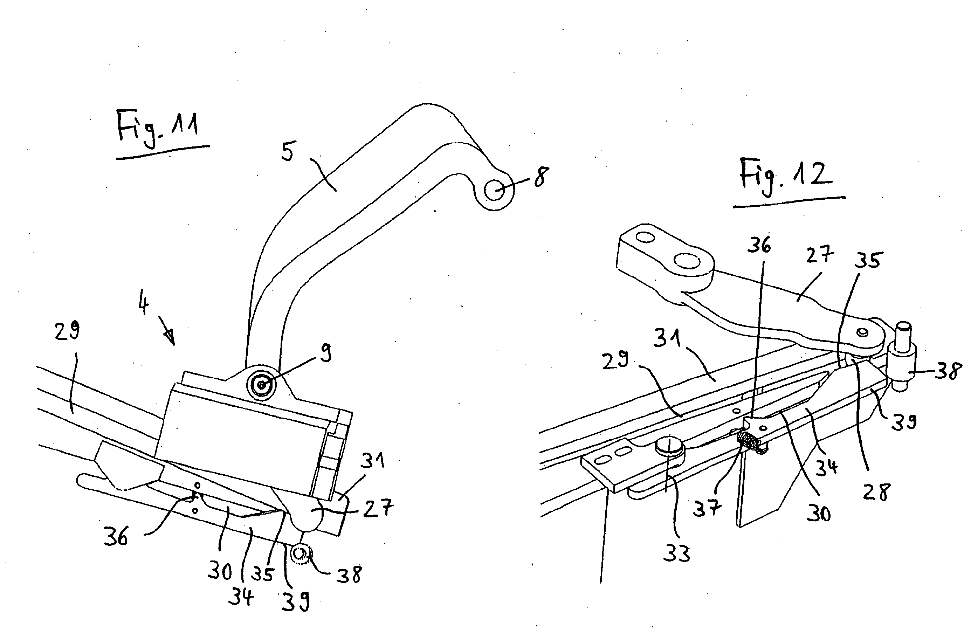

Am vorderen Ende der Schloßführung 30 ist eine vertikale Schwenkachse 33 vorgesehen, die von einem Bolzen gebildet werden kann und um die eine Schloßklinke 34 schwenkbar gelagert ist. Durch die Schloßklinke 34 ist die Abzweigstelle 32 der Schloßführung 30 von der Umlenkführung 29 schließbar. Hierzu weist die Schloßklinke 34 an ihrem der Schwenkachse 33 abgewandten Ende einen der Abzweigstelle 32 zugewandten Schließabschnitt 35 auf. Wenn sich die Schloßklinke in ihrer inneren Endstellung befindet, in der sie um die Schwenkachse 33 entgegen dem Uhrzeigersinn verschwenkt ist und die in Fig. 11 bis 15 gezeigt ist, ist die Abzweigstelle 32 geschlossen, so daß die Schloßführung 30 für den Führungsstift 28 nicht zugänglich ist. Wenn sich die Schloßklinke 34 in ihrer äußeren Endstellung befindet, in der sie um die Schwenkachse 33 im Uhrzeigersinn verschwenkt ist und die in Fig. 9 und 10 gezeigt ist, ist die Abzweigstelle 32 geöffnet, so daß die Schloßführung 30 für den Führungsstift 28 zugänglich ist.

Die Schloßklinke 34 bildet einen Bestandteil der Schloßführung 30. Wie aus Fig. 9 bis 15 ersichtlich, bildet die Innenseite der Schloßklinke 34 die Außenseite der Schloßführung 30. Die Innenseite der Schloßführung 30 wird von einer Außenseite des Führungsblechs 31 gebildet.

In der Schloßführung 30 ist eine Sperrnase 36 für den Führungsstift 28 vorgesehen. Die Sperrnase 36 befindet sich etwa in der Mitte der Schloßführung 30. Sie ist an der Schloßklinke 34 vorgesehen. Ihre der Schwenkachse 33 zugewandte Flanke bildet einen Winkel von im wesentlichen 90° mit der Schloßführung 30. Ihre der Schwenkachse 33 abgewandte Flanke bildet einen Winkel von etwa 45° mit der Schloßführung 30.

Die Schloßklinke 34 ist durch eine Rückholfeder 37 vorbelastet, die als Zugfeder ausgestaltet ist und die zum einen an dem Führungsblech 31 und zum anderen an der Schloßklinke 34 befestigt ist, und zwar unterhalb dieser Bauteile. Durch die Rückholfeder 37 wird die Schloßklinke 34 in einer Richtung entgegen dem Uhrzeigersinn um die Schwenkachse 33 vorbelastet, also in derjenigen Richtung, in der die Schloßklinke 34 die Abzweigstelle 32 schließt.

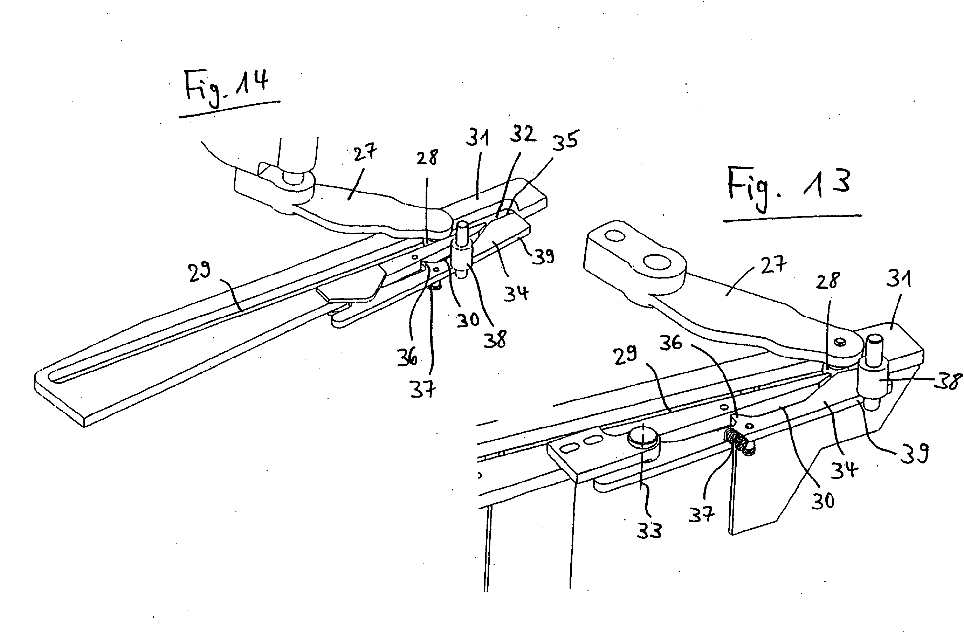

Die Schloßklinke 34 ist verriegelbar. Hierzu ist an dem Gleitschlitten 4 ein Verriegelungsbolzen 38 vorgesehen, der sich an dem dem Schließabschnitt 35 gegenüberliegenden, äußeren Abschnitt 39 der Schloßklinke 34 befindet, wenn die Schiebetüre eine Zwischenstellung einnimmt, wie in Fig. 13 und 14 gezeigt. In dieser Stellung wird durch den Verriegelungsbolzen 38 eine Verschwenkung der Schloßklinke 34 um die Schwenkachse 33 im Uhrzeigersinn, also in einer Richtung zur Öffnung der Abzweigstelle 32, verhindert, so daß die Abzweigstelle 32 geschlossen bleibt. Wenn die Schiebetüre 1 geschlossen oder angestellt ist, wie in Fig. 9 bis 12 gezeigt, befindet sich der Verriegelungsbolzen 38 nicht an dem dem Schließabschnitt 35 gegenüberliegenden, äußeren Abschnitt 39 der Schloßklinke 34, so daß die Schloßklinke 34 um die Schwenkachse 33 im Uhrzeigersinn verschwenkt werden kann und damit die Abzweigstelle 32 geöffnet werden kann.

Wenn die Schiebetüre 1 geschlossen ist, nimmt der Umlenkarm 27 die in Fig. 9 gezeigte Stellung ein, in der sein Führungsstift 28 an der der Schwenkachse 33 zugewandten Flanke der Sperrnase 36 anliegt. Da diese Flanke in einem Winkel von etwa 90° zur Schloßführung 30 verläuft, besteht eine Selbsthemmung, so daß die Schiebetüre 1 in dieser Stellung arretiert ist.

Zum Öffnen der Schiebetüre 1 wird die Schloßklinke 34 um die Schwenkachse 33 im Uhrzeigersinn verschwenkt, bis sie die in Fig. 10 gezeigte Stellung einnimmt. Diese Verschwenkung kann von Hand erfolgen, beispielsweise durch die Betätigung eines Öffnungshebels oder Öffnungsgriffs. Sie kann allerdings auch mit Motorkraft erfolgen, nämlich durch ein Relais, einen Elektromotor, einen Magnetschalter oder einen anderen Aktuator (in der Zeichnung nicht dargestellt). Wenn sich die Schloßklinke 34 in der in Fig. 10 gezeigten Stellung befindet, kann der Scharnierbügel 5 verschwenkt werden. Hierdurch gleitet der Führungsstift 28 an der Sperrnase 36 vorbei in der Schloßführung 30 weiter nach hinten. Der Verriegelungsbolzen 38 befindet sich weiterhin nicht auf der dem Schließabschnitt 35 gegenüberliegenden Abschnitt 39 der Schloßklinke 34, so daß der Führungsstift 28 den weiteren Weg in der Schloßführung 30 nach hinten durchlaufen kann.

Auf diesem Weg durchläuft der Führungsstift 28 die Abzweigstelle 32. Er gelangt zum hinteren Ende der Umlenkführung 29, wie in Fig. 11 und 12 gezeigt. Der Scharnierbügel 5 ist jetzt so weit verschwenkt worden, daß die Schiebetüre 1 angestellt ist, wie in Fig. 2 gezeigt. In dieser Stellung ist die Abzweigstelle 32 geschlossen, da die Rückholfeder 37 die Schloßklinke 34 um die Schwenkachse 33 entgegen dem Uhrzeigersinn verschwenkt hat.

Anschließend wird die Führungsschiene 3 um ein kurzes Stück relativ zum Gleitschlitten 4 angetrieben. Hierdurch gelangt der Verriegelungsbolzen 38 an den dem Schloßabschnitt 35 gegenüberliegenden äußeren Abschnitt 39 der Schloßklinke 34, so daß die Schloßklinke 34 in ihrer die Abzweigstelle 32 schließenden Stellung verriegelt wird, wie in Fig. 13 gezeigt. Der Verriegelungsbolzen wird jetzt in der Umlenkführung 29 geführt.

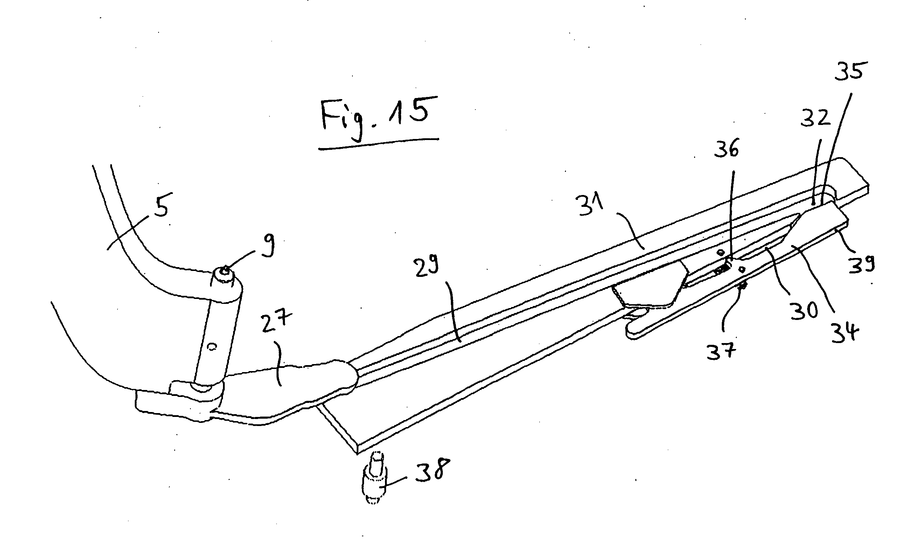

Anschließend wird der Scharnierbügel 5 weiter verschwenkt, wodurch das vordere Ende der Schiebetüre 1 von der Karosserie 2 weggeschwenkt wird. Danach wird die Führungsschiene 3 angetrieben, so daß die Schiebetüre 1 nach hinten geschoben wird. Während dieser Bewegungen wird die Schiebetüre 1 durch den in der Umlenkführung 29 gleitenden Führungsstift 28 geführt. Die Umlenkführung 29 ist derart ausgestaltet, daß die Schiebetüre 1 im wesentlichen parallel zur Karosserie 2 nach hinten bewegt wird. Hierzu kann die Umlenkführung 29 einen im wesentlichen geradlinigen Verlauf aufweisen, wie insbesondere aus den Fig. 14 und 15 ersichtlich. Sie kann allerdings auch gekrümmt sein oder gekrümmte Abschnitte aufweisen.

Wenn der Führungsstift 28 am vorderen Ende der Umlenkführung 29 angelangt ist, wie in Fig. 15 gezeigt, ist die Schiebetüre 1 vollständig geöffnet.

Beim Schließen der Schiebetüre 1 wird der umgekehrte Weg durchlaufen. Der Führungsstift 28 bewegt sich in der Umlenkführung 29 aus der in Fig. 15 gezeigten Stellung über die in Fig. 14 gezeigte Zwischenstellung bis annähernd zum hinteren Ende der Umlenkführung 29, wie in Fig. 13 gezeigt. Anschließend wird die Führungsschiene 3 um ein kurzes Stück verfahren, bis der Verriegelungsbolzen 38 den dem Schließabschnitt 35 gegenüberliegenden Abschnitt 39 der Schloßklinke 34 freigibt, wie in Fig. 12 gezeigt. Danach wird der Scharnierbügel 5 verschwenkt. Hierdurch wird die Schloßführung 30 geöffnet. Dies erfolgt durch einen Druck des Führungsstifts 28 auf den Schließabschnitt 35, so daß die Schloßklinke 34 um die Schwenkachse 33 im Uhrzeigersinn entgegen der Kraft der Rückholfeder 37 verschwenkt wird. Dadurch wird die Abzweigstelle 32 geöffnet, und der Führungsstift 28 gelangt in die Schloßführung 30.

Anschließend gelangt der Führungsstift 28 in Anlage an die der Schwenkachse 33 abgewandte Flanke der Sperrnase 36, so daß die Schloßklinke 34 weiter aufgedrückt wird, bis der Führungsstift 28 an der Sperrnase 36 vorbeigegangen ist. In dieser Stellung wird die Schloßklinke 34 durch die Rückholfeder 37 wieder zugezogen, also um die Schwenkachse 33 entgegen dem Uhrzeigersinn verschwenkt, so daß die verriegelte Stellung gemäß Fig. 9 erreicht wird, in der die Schiebetüre 1 geschlossen und verriegelt ist.

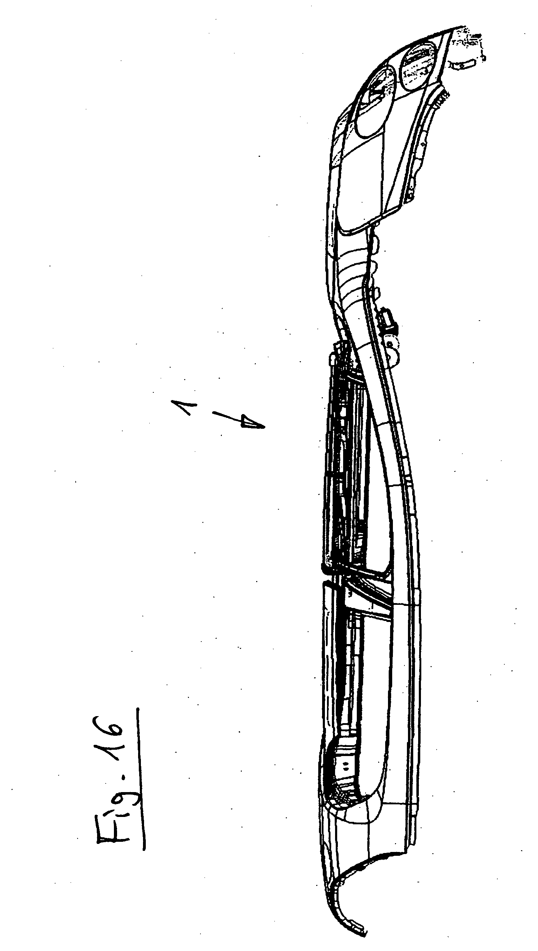

In Fig. 16 bis 19 ist die Schiebetüre 1 in einer Ansicht von oben gezeigt, wobei es sich allerdings nicht wie in Fig. 1 bis 15 um eine linke hintere Schiebetüre eines Kraftfahrzeugs handelt, sondern um eine linke vordere Schiebetüre des Kraftfahrzeugs, die nach vorne geöffnet werden kann.

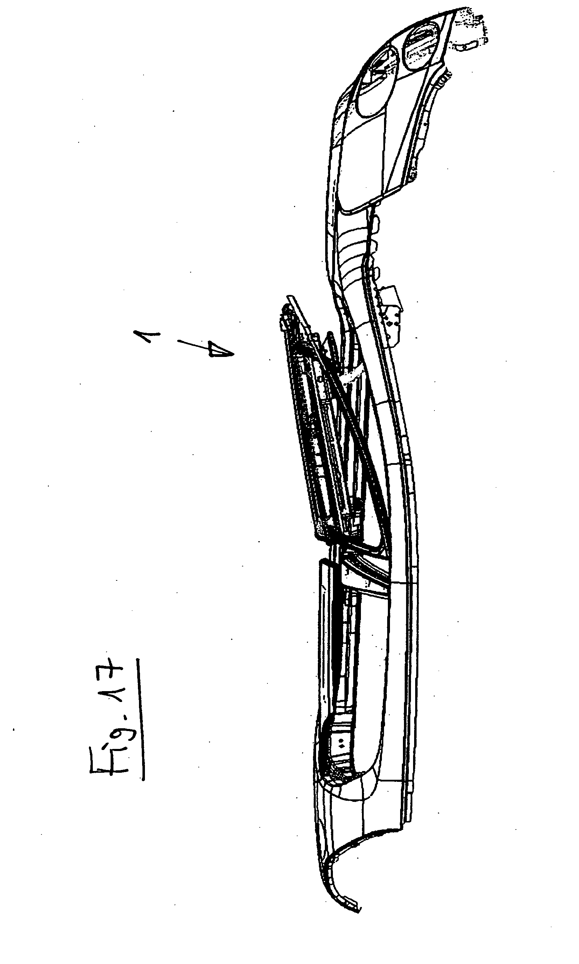

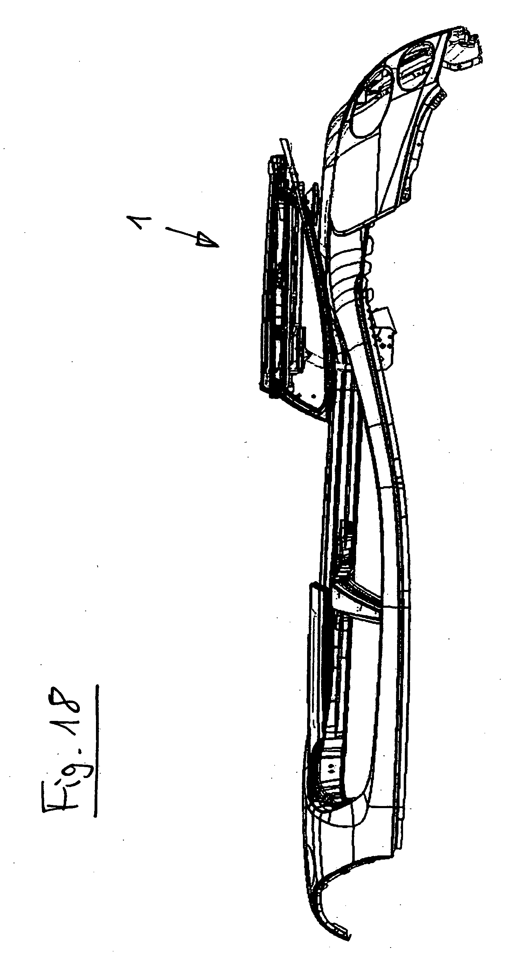

Wie aus Fig. 16 bis 18 ersichtlich ist die normale Öffnungsbewegung der Schiebetüre 1 derart ausgestaltet, daß diese Schiebetüre 1 aus der geschlossenen Stellung, die in Fig. 16 gezeigt ist, zunächst angewinkelt und in einem geringen Ausmaß in Längsrichtung nach vorne verschoben wird, wie in Fig. 17 gezeigt, bis die vollständig geöffnete Stellung gemäß Fig. 18 erreicht wird, in der die Schiebetüre eine Position einnimmt, die im wesentlichen parallel zur Ausgangslage bzw. zur Fahrzeug-Längsachse ist.

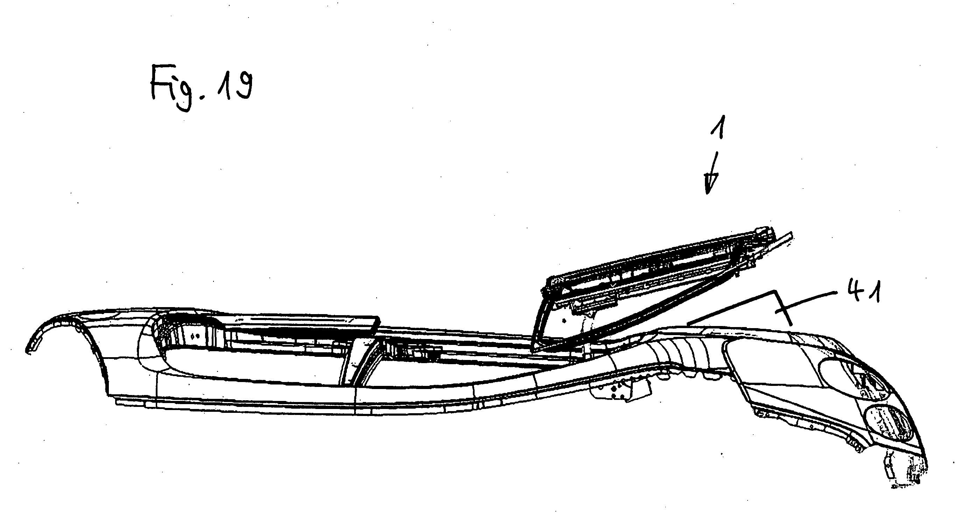

Wenn allerdings die lenkbaren Räder des Kraftfahrzeugs, also die Vorderräder, eingeschlagen sind, besteht die Gefahr, daß die Schiebetüre mit einem eingeschlagenen Vorderrad kollidiert. In Fig. 19 sind die Vorderräder nach links eingeschlagen. Das linke Vorderrad 41 ragt nach links aus der Fahrzeugkarosserie heraus. Wie aus Fig. 19 ersichtlich ist das linke Vorderrad 41 so weit nach links eingeschlagen, daß die Schiebetüre in der vollständig geöffneten Position gemäß Fig. 18 mit dem Vorderrad 41 kollidieren würde.

Um dies zu verhindern ist der Radeinschlag des Kraftfahrzeugs nach Richtung und Ausmaß durch einen Drehwinkelsensor für die Lenkstange des Kraftfahrzeugs feststellbar. Die Öffnung der Schiebetüre 1 ist in Abhängigkeit von dem festgestellten Radeinschlag begrenzbar. Wie aus Fig. 19 ersichtlich endet die Öffnungsbewegung der Schiebetüre 1, bevor diese die vollständig geöffnete Stellung gemäß Fig. 18 erreicht hat. Fig. 19 zeigt die geöffnete Endstellung der Schiebetüre 1 bei nach links eingeschlagenen Vorderrädern.

Die Erfindung ermöglicht die Erkennung des Radeinschlagwinkels zur Erkennung der Hindernisfreiheit einer automatischen Schiebetüröffnung. Sie ermöglicht die Verhinderung einer Kollision der Schiebetüre mit dem Vorderrad bzw. gelenkten Rad eines mit einer automatischen Schiebetüröffnung versehenen Fahrzeugs. Die Erkennung kann durch einen Drehwinkelsensor an der Lenkstange erfolgen. Die Erkennung des Drehwinkels kann allerdings auch mittels mindestens zwei Endschaltern erfolgen, die durch Nocken betätigbar sein können. Die Verarbeitung der Winkelinformation erfolgt durch eine geeignete Hardware und Software.

In Abhängigkeit von der Winkelinformation kann die Öffnungsbewegung der Schiebetüre beeinflußt und/oder begrenzt werden. Es ist möglich, die Öffnungsbewegung der Schiebetüre zu beenden, bevor die Schiebetüre mit dem Rad kollidiert. Stattdessen oder zusätzlich ist es möglich, den Öffnungswinkel der Schiebetüre in Abhängigkeit von der festgestellten Winkelinformation zu bestimmen. Insbesondere kann der Öffnungswinkel der Schiebetüre in Abhängigkeit von der Winkelinformation vergrößert werden. Der Öffnungswinkel der Schiebetüre kann derart eingestellt werden, daß die Schiebetüre auch im vollständig ausgefahrenen Zustand nicht mit dem Rad kollidiert. Ein Beispiel ist in Fig. 18 und Fig. 19 gezeigt: Entsprechend der Winkelinformation wird die Türe parallel zum Fahrzeug (Fig. 18) oder aber gemäß des Radüberstandes winkelig zum Fahrzeug (Fig. 19) geöffnet. Die Erfindung ermöglicht es, die Schiebetüre mit einem geringstmöglichen Abstand zur Karosserie am Fahrzeug zu betätigen. Sie ermöglicht die Realisierung einer Schiebetüre an Fahrzeugen mit variablen Außenkonturen, insbesondere bei Fahrzeugen mit nach vorne öffnenden Schiebetüren.

In entsprechender Weise können insbesondere die hinteren Türen eines Fahrzeugs vor einer Kollision mit einer Tankklappe und/oder mit einer Zapfpistole geschützt werden. Die Türbewegung und/oder Türstellung der Vordertüre kann an die Radstellung der Vorderräder angepaßt werden. Die Türbewegung und/oder Türstellung der Hintertüre kann an äußere Hindernisse wie insbesondere eine geöffnete Tankklappe und/oder eine Zapfpistole angepaßt werden. Die Radstellung und/oder Hindernisse und/oder Fahrzeugzustände können durch geeignete Sensoren erkannt werden. Zur Erkennung eignen sich allerdings auch Fahrzeuginformationssysteme, insbesondere das fahrzeugeigene Bussystem. Die Informationen über einen oder mehrere Fahrzeugzustände können durch Hardware und Software verarbeitet werden und in ein angepaßtes Bewegungsprofil umgewandelt werden.

Bei der Ausführungsform nach Fig. 16 bis 19 sind die Umlenkführung 29 und/oder die Schloßführung 30 sowie die jeweils zugehörigen Bauteile derart ausgestaltet, daß sich der dargestellte Bewegungsablauf ergibt.

## Patentansprüche

1. Schiebetüre für ein Fahrzeug, die an ihrer Innenseite eine Führungsschiene (3) aufweist, die in einem Gleitschlitten (4) längsverschieblich gelagert ist, wobei an dem Fahrzeug ein Scharnierbügel (5) schwenkbar (8) gelagert ist und der Scharnierbügel (5) an dem Gleitschlitten (4) schwenkbar (9) gelagert ist,
**dadurch gekennzeichnet,**
**daß** eine Zustandsgröße des Fahrzeugs feststellbar ist, daß die Öffnungsbewegung der Schiebetüre (1) in Abhängigkeit von der festgestellten Zustandsgröße beeinflußbar und/oder begrenzbar ist und daß der Öffnungswinkel der Schiebetüre (1) in Abhängigkeit von der festgestellten Zustandsgröße bestimmbar ist.

2. Schiebetüre nach Anspruch 1, **gekennzeichnet durch** einen Sensor zum Feststellen der Zustandsgröße des Fahrzeugs.

3. Schiebetüre nach einem der vorhergehenden Ansprüche, **dadurch gekennzeichnet, daß** der Radeinschlag (41) des Fahrzeugs feststellbar ist, insbesondere durch einen Drehwinkelsensor für eine Lenkstange des Fahrzeugs und/oder durch zwei Endschalter für die Lenkung des Fahrzeugs.

4. Schiebetüre nach einem der vorhergehenden Ansprüche, **dadurch gekennzeichnet, daß** die Öffnung der Tankklappe des Fahrzeugs feststellbar ist.

5. Schiebetüre nach einem der vorhergehenden Ansprüche, **dadurch gekennzeichnet, daß** das Vorhandensein einer Zapfipistole in der Tanköffnung des Fahrzeugs feststellbar ist.

6. Schiebetüre nach einem der vorhergehenden Ansprüche, **gekennzeichnet durch** einen Motor (16) zum Antrieb der Führungsschiene (3).

7. Schiebetüre nach einem der vorhergehenden Ansprüche, **gekennzeichnet durch** einen Motor (10) zum Antrieb des Scharnierbügels (5).

8. Schiebetüre nach einem der vorhergehenden Ansprüche, **dadurch gekennzeichnet, daß** die Schiebetüre (1) an dem dem Scharnierbügel (5) abgewandten Ende an dem Fahrzeug arretierbar ist.

9. Schiebetüre nach einem der vorhergehenden Ansprüche, **dadurch gekennzeichnet, daß** an dem Scharnierbügel (5) ein Umlenkarm (27) mit einem Führungsstift (28) vorgesehen ist, der in einer an der Schiebetüre (1) vorgesehenen Umlenkführung (29) geführt ist.

10. Fahrzeug, insbesondere Kraftfahrzeug, **gekennzeichnet durch** eine Schiebetüre (1) nach einem der Ansprüche 1 bis 9.

11. Verfahren zum Öffnen einer Schiebetüre eines Fahrzeugs, die an ihrer Innenseite eine Führungsschiene (3) aufweist, die in einem Gleitschlitten (4) längsverschieblich gelagert ist, wobei an dem Fahrzeug ein Scharnierbügel (5) schwenkbar (8) gelagert ist und der Scharnierbügel (5) an dem Gleitschlitten (4) schwenkbar (9) gelagert ist,
**dadurch gekennzeichnet,**
**daß** eine Zustandsgröße des Fahrzeugs festgestellt wird, daß die Öffnungsbewegung der Schiebetüre in Abhängigkeit von der festgestellten Zustandsgröße beeinflußt und/oder begrenzt wird und daß der Öffnungswinkel der Schiebetüre (1) in Abhängigkeit von der festgestellten Zustandsgröße bestimmt wird.

12. Verfahren nach Anspruch 11, **gekennzeichnet durch** die Merkmale eines oder mehrerer der Ansprüche 2 bis 5.

13. Verfahren nach Anspruch 11 oder 12, **dadurch gekennzeichnet, daß** die Schiebetüre die Merkmale eines oder mehrerer der Ansprüche 6 bis 9 aufweist.

## Claims

1. A sliding door for a vehicle which has a guide rail (3) at its inner side, said guide rail being longitudinally displaceably supported in a sliding carriage (4), wherein a hinge bow (5) is pivotably (8) supported at the vehicle and the hinge bow (5) is pivotably (9) supported at the sliding carriage (4),
**characterised in that**
a state variable of the vehicle can be determined; **in that** the opening movement of the sliding door (1) can be influenced and/or limited in dependence on the determined state variable; and **in that** the opening angle of the sliding door (1) can be ascertained in dependence on the determined state variable.

2. A sliding door in accordance with claim 1, **characterised by** a sensor for determining the state variable of the vehicle.

3. A sliding door in accordance with one of the preceding claims, **characterised in that** the wheel turning angle (41) of the vehicle can be determined, in particular by an angle of rotation sensor for a steering rod of the vehicle and/or by two limit switches for the steering of the vehicle.

4. A sliding door in accordance with one of the preceding claims, **characterised in that** the opening of the fuel filler flap of the vehicle can be determined.

5. A sliding door in accordance with one of the preceding claims, **characterised in that** the presence of a gas pump nozzle in the tank opening of the vehicle can be determined.

6. A sliding door in accordance with one of the preceding claims, **characterised by** a motor (16) for driving the guide rail (3).

7. A sliding door in accordance with one of the preceding claims, **characterised by** a motor (10) for driving the hinge bow (5).

8. A sliding door in accordance with one of the preceding claims, **characterised in that** the sliding door (1) can be locked at the end of the vehicle remote from the hinge bow (5).

9. A sliding door in accordance with one of the preceding claims, **characterised in that** a deflection arm (27) is provided at the hinge bow (5) and has a guide pin (28) which is guided in a deflection guide (29) provided at the sliding door (1).

10. A vehicle, in particular a motor vehicle, **characterised by** a sliding door (1) in accordance with one of the claims 1 to 9.

11. A method of opening a sliding door of a vehicle which has a guide rail (3) at its inner side, said guide rail being longitudinally displaceably supported in a sliding carriage (4), wherein a hinge bow (5) is pivotably (8) supported at the vehicle and the hinge bow (5) is pivotably (9) supported at the sliding carriage (4),
**characterised in that**
a state variable of the vehicle is determined; **in that** the opening movement of the sliding door is influenced and/or limited in dependence on the determined state variable; and **in that** the opening angle of the sliding door (1) is ascertained in dependence on the determined state variable.

12. A method in accordance with claim 11, **characterised by** the features of one or more of the claims 2 to 5.

13. A method in accordance with claim 11 or claim 12, **characterised in that** the sliding door has the features of one or more of the claims 6 to 9.

## Revendications

1. Porte coulissante pour un véhicule, qui présente sur son côté intérieur un rail de guidage (3) qui est monté de façon à coulisser dans le sens longitudinal dans une sellette à glissières (4), étant entendu qu'une bride de charnière (5) est montée sur le véhicule de façon à pouvoir pivoter (8) et que la bride de charnière (5) est montée de façon à pouvoir pivoter (9) sur la sellette à glissières (4),
**caractérisée**
**en ce qu'**une valeur d'état du véhicule peut être détectée, en ce que le mouvement d'ouverture de la porte coulissante (1) peut être influencé et/ou limité en fonction de la valeur d'état détectée et en ce que l'angle d'ouverture de la porte coulissante (1) peut être déterminé en fonction de la valeur d'état détectée.

2. Porte coulissante selon la revendication 1, **caractérisée par** un capteur destiné à détecter la valeur d'état du véhicule.

3. Porte coulissante selon l'une des revendications précédentes, **caractérisée en ce que** le braquage (41) du véhicule peut être détecté, en particulier par un capteur d'angle de rotation pour une barre de direction du véhicule et/ou par deux interrupteurs de fin de course pour la direction du véhicule.

4. Porte coulissante selon l'une des revendications précédentes, **caractérisée en ce que** l'ouverture de la trappe à carburant du véhicule peut être détectée.

5. Porte coulissante selon l'une des revendications précédentes, **caractérisée en ce que** la présence d'un pistolet de remplissage dans l'ouverture de réservoir du véhicule peut être détectée.

6. Porte coulissante selon l'une des revendications précédentes, **caractérisée par** un moteur (16) destiné à entraîner le rail de guidage (3).

7. Porte coulissante selon l'une des revendications précédentes, **caractérisée par** un moteur (10) destiné à entraîner la bride de charnière (5).

8. Porte coulissante selon l'une des revendications précédentes, **caractérisée en ce que** la porte coulissante (1) peut être arrêtée sur le véhicule à l'extrémité opposée à la bride de charnière (5).

9. Porte coulissante selon l'une des revendications précédentes, **caractérisée en ce qu'**il est prévu sur la bride de charnière (5) un bras de renvoi (27) avec une tige de guidage (28) qui est guidé dans un guide de renvoi (29) prévu sur la porte coulissante (1).

10. Véhicule, en particulier véhicule à moteur, **caractérisé par** une porte coulissante (1) selon l'une des revendications 1 à 9.

11. Procédé d'ouverture d'une porte coulissante d'un véhicule qui présente sur son côté intérieur un rail de guidage (3) qui est monté de façon à coulisser dans le sens longitudinal dans une sellette à glissières (4), étant entendu qu'une bride de charnière (5) est montée sur le véhicule de façon à pouvoir pivoter (8) et que la bride de charnière (5) est montée de façon à pouvoir pivoter (9) sur la sellette à glissières (4),
**caractérisé**
**en ce qu'**une valeur d'état du véhicule est détectée, en ce que le mouvement d'ouverture de la porte coulissante est influencé et/ou limité en fonction de la valeur d'état détectée et en ce que l'angle d'ouverture de la porte coulissante (1) est déterminé en fonction de la valeur d'état détectée.

12. Procédé selon la revendication 11, **caractérisé par** les caractéristiques d'une ou plusieurs des revendications 2 à 5.

13. Procédé selon la revendication 11 ou 12, **caractérisé en ce que** la porte coulissante présente les caractéristiques d'une ou plusieurs des revendications 6 à 9.
